(19) Europäisches Patentamt
European Patent Office
Office européen des brevets

(11) Veröffentlichungsnummer: **0 025 928**
**B1**

(12) # EUROPÄISCHE PATENTSCHRIFT

(45) Veröffentlichungstag der Patentschrift: **13.04.83**

(51) Int. Cl.³: **C 08 G 63/62**

(21) Anmeldenummer: **80105357.0**

(22) Anmeldetag: **08.09.80**

(54) **Verfahren zur Herstellung von aromatischen Polycarbonaten nach dem Phasengrenzflächenverfahren.**

(30) Priorität: **20.09.79 DE 2938109**

(43) Veröffentlichungstag der Anmeldung:
**01.04.81 Patentblatt 81/13**

(45) Bekanntmachung des Hinweises auf die Patenterteilung:
**13.04.83 Patentblatt 83/15**

(84) Benannte Vertragsstaaten:
**DE FR GB IT NL**

(56) Entgegenhaltungen:
**US-A-3 035 020**

***Die Akte enthält technische Angaben, die nach dem Eingang der Anmeldung eingereicht wurden und die nicht in dieser Patentschrift enthalten sind.***

(73) Patentinhaber: **BAYER AG, Zentralbereich Patente, Marken und Lizenzen, D-5090 Leverkusen 1, Bayerwerk (DE)**

(72) Erfinder: **Hucks, Uwe, Am Marienstift 30, D-4234 Alpen (DE)**
Erfinder: **Tresper, Erhard, Dr., Am Dahlerdyk 154, D-4150 Krefeld (DE)**

**EP 0 025 928 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von aromatischen Polycarbonaten nach dem Phasengrenzflächenverfahren

Das Phasengrenzflächenverfahren zur Herstellung aromatischer, insbesondere thermoplastischer Polycarbonate ist in verschiedenen Variationen bekannt. (Siehe beispielsweise US-PS 3 028 365, US-PS 3 275 601, US-3 530 094, DE-OS 1 920 302, DE-OS 2 063 050, DE-OS 2 315 888, DE-OS 2 408 068, DE-OS 2 410 716, DE-OS 2 602 366, sowie Monographie Schnell, Chemistry and Physics of Polycarbonats, Intersciences Publishers, 1964.)

Für das Phasengrenzflächenverfahren besteht einerseits der Grenzfall des sogenannten Suspensionsverfahrens, das bei Vorliegen von in wäßriger alkalischer Lösung teilweise oder völlig unlöslichen Diphenolen bzw. Diphenolaten Anwendung findet, andererseits gemäß US-PS 3 035 020 die Möglichkeit, die wäßrige Phase mit anorganischen Salzen vor Beginn der Reaktion anzureichern, um einen besseren Umsatz zu erzielen, wobei allerdings eine Wiederausscheidung der festen Salze während oder nach Beendigung der Reaktion nicht erwünscht wird.

Aufgabe der vorliegenden Erfindung ist es, die beim Umsatz des Phosgens oder der Chlorkohlensäureester beispielsweise mit den Alkalisalzen der aromatischen Diphenole entstehenden Mengen an Alkalichlorid, Alkalicarbonat und gegebenenfalls Alkalihydrogencarbonat auf einfache Weise zu isolieren.

Gegenstand der vorliegenden Erfindung ist ein Verfahren zur Herstellung von aromatischen, insbesondere thermoplastischen Polycarbonaten nach dem Phasengrenzflächenverfahren, das dadurch gekennzeichnet ist, daß man das Verfahren in Gegenwart einer gesättigten Lösung von Alkalichlorid, Alkalicarbonat, Alkaliphenolaten und gegebenenfalls Alkalihydrogencarbonat, vorzugsweise in Gegenwart von NaCl, $Na_2CO_3$, Natriumphenolaten und gegebenenfalls $NaHCO_3$ durchführt, und die bei den Verfahren entstehenden Mengen an Alkalichlorid, Alkalicarbonat und gegebenenfalls Alkalihydrogencarbonat in fester Form abtrennt.

Als Phenolate sind solche von Diphenolen, Monophenolen und gegebenenfalls von Polyphenolen mit mehr als zwei phenolischen OH-Gruppen zu verstehen.

Gesättigte Lösungen im Sinne vorliegender Erfindung können alle Zustände sein, die zwischen der Anfangssättigung zu Beginn der Reaktion und der Endsättigung am Ende der Reaktion liegen, wobei unter Anfangssättigung der Gleichgewichtszustand unter den jeweiligen Verfahrensbedingungen zwischen in fester Form und in wäßriger Lösung jeweils vorliegenden Salzen verstanden sind, der dadurch erreicht wird, daß man eine an anorganischen Salzen nicht weiter aufnahmefähige wäßrige Lösung mit konzentrierter Natronlauge in den jeweils erforderlichen Mengen alkalisch stellt und die jeweils erforderlichen Mengen an Diphenolen, Monophenolen und gegebenenfalls Polyphenolen mit mehr als zwei phenolischen OH-Gruppen in fester Form zusetzt; als Endsättigung wird der Gleichgewichtszustand unter den jeweiligen Verfahrensbedingungen verstanden, der sich zwischen in fester Form vorliegenden anorganischen Salzen und ihrer, diese Salze nicht mehr lösenden alkalischen wäßrigen Lösung einstellt.

Die Anfangssättigung kann in einem Sonderfall auch der unter den jeweiligen Verfahrensbedingungen vorliegende Gleichgewichtszustand sein, der dadurch erreicht wird, daß man die an anorganischen Salzen nicht weiter aufnahmefähige wäßrige Lösung nicht zusetzt.

Die bei dem erfindungsgemäßen Verfahren entstehenden Mengen an Alkalichlorid, Alkalicarbonat und gegebenenfalls Alkalihydrogencarbonat werden in fester Form und als gesättigte wäßrige Lösung abgetrennt. Eine derartige erfolgreiche Durchführung des Phasengrenzflächenverfahrens in Anwesenheit oder unter Bildung einer »dritten Phase« aus anorganischen Salzen war für den Fachmann nicht naheliegend und nicht zu erwarten.

Das erfindungsgemäße Verfahren wird sowohl kontinuierlich, als auch diskontinuierlich, vorzugsweise jedoch kontinuierlich durchgeführt.

Nach dem erfindungsgemäßen Verfahren können sowohl niedermolekulare, vorzugsweise jedoch hochmolekulare thermoplastische Polycarbonate erhalten werden, die in ihrem Eigenschaftsbild den nach bekannten Zweiphasengrenzflächenverfahren erhaltenen Polycarbonaten entsprechen.

Ausgangsverbindungen für die Herstellung der aromatischen Polycarbonate sind beliebige Diphenole, insbesondere jedoch die der folgenden Formel (I)

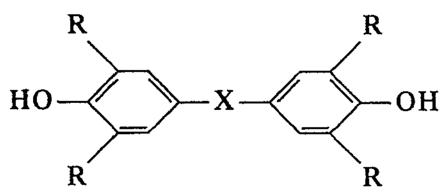

(I)

worin

X = $C_1-C_8$-Alkylen, $C_2-C_6$-Alkyliden, $C_5-C_{15}$-Cycloalkylen, $C_5-C_{15}$-Cycloalkyliden $-S-$, $-O-SO_2-$ oder ein Rest der Formel

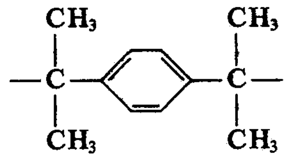

ist und

R = H, Cl, Br oder $C_1-C_4$-Alkyl ist.

Geeignete Diphenole sind beispielsweise

2,2-Bis-(4-hydroxyphenyl)-propan (Bisphenol A),
2,2-Bis-(3,5-dichlor-4-hydroxyphenyl)-propan (Tetrachlorbisphenol A),
2,2-Bis-(3,5-dibrom-4-hydroxyphenyl)-propan (Tetrabrombisphenol A),
Bis-(4-hydroxyphenyl)-äther,
2,2-Bis-(3,5-dimethyl-4-hydroxyphenyl)-propan (Tetramethylbisphenol A),
1,1-Bis-(4-hydroxyphenyl)-cyclohexan (Bisphenol Z),
Bis-(4-hydroxyphenyl)-p-diisopropylbenzol (Dreikernbisphenol A),
Bis-(4-hydroxyphenyl)-sulfid (Thiobisphenol) und
Bis-(4-hydroxyphenyl)-sulfon (Sulfonylbisphenol).

Die für das erfindungsgemäße Verfahren erforderliche Phosgenmenge liegt zwischen 1,05 und 1,80 Mol pro Mol an eingesetztem Diphenol, vorzugsweise zwischen 1,10 und 1,30 Mol pro Mol an eingesetztem Diphenol.
Die erforderliche Phosgenmenge kann ganz oder teilweise durch äquimolare Mengen an Bischlorkohlensäureester der erfindungsgemäß geeigneten Diphenole ersetzt werden.
Im allgemeinen setzt man pro Mol Diphenoleinsatz 0 bis 2,5 kg an gesättigter Lösung von Alkalichlorid, Alkalicarbonat und gegebenenfalls Alkalihydrogencarbonat ein.
Für die organische Phase des erfindungsgemäßen Verfahrens werden die als Polycarbonatlösungsmittel üblichen chlorierten aliphatischen oder aromatischen Kohlenwasserstoffe wie beispielsweise $CH_2Cl_2$, 1,1-Dichloräthan, Chlorbenzol oder Chlortoluole eingesetzt. Vorzugsweise werden Gemische aus Chlorbenzol und Methylenchlorid mit Chlorbenzolgehalten von über 30 Gew.-% oder reines Chlorbenzol eingesetzt.
Die Menge des organischen Lösungsmittels wird jeweils so bemessen, daß nach der Reaktion Polycarbonatkonzentrationen zwischen 3 und 30 Gew.-%, vorzugsweise zwischen 12 und 20 Gew.-%, bezogen jeweils auf Gesamtgewicht an organischer Phase vorliegen.
Das erfindungsgemäße Phasengrenzflächenverfahren wird vorzugsweise zweistufig durchgeführt, wobei die optimale OH-Konzentration in der ersten Reaktionsstufe zwischen 0,01 und 0,2 Gew.-%, bezogen auf wäßrige Phase, beträgt und in der zweiten Reaktionsstufe zwischen 0,2 und 0,6 Gew.-%, bezogen auf wäßrige Phase, liegt.
Die OH-Konzentration resultiert aus der Summe an dissoziiertem und gegebenenfalls undissoziiertem Alkalihydroxid in der wäßrigen Phase.
Bei diskontinuierlicher Verfahrensweise ist es zweckmäßig die Alkalität der wäßrigen Phase durch pH-Messungen zu kontrollieren, wobei in der ersten Reaktionsstufe (Phosgenierungsstufe) ein pH-Wert von etwa 10 bis 14 und in der zweiten Reaktionsstufe (Polykondensationsstufe) von etwa 12 bis 14 einzuhalten ist.
Geeignete Katalysatoren für das erfindungsgemäße Verfahren sind insbesondere tertiäre aliphatische Amine wie Triäthylamin, Tributylamin oder auch cyclische Azaverbindungen wie N-Alkyl-piperidine.
Die Menge an Katalysator beträgt in der ersten Reaktionsstufe zwischen 0 und 10 Mol-%, bezogen auf Mol Diphenolumsatz, und in der zweiten Reaktionsstufe zwischen 0,05 und 10 Mol-%, bezogen auf Mol Diphenolumsatz.
Die Phosgenzugabe erfolgt ausschließlich in der ersten Reaktionsstufe, wobei man Oligocarbonate erhält. In der zweiten Reaktionsstufe erfolgt die Polykondensation zu hochmolekularen Produkten und/oder Abreaktion vorhandener Chlorkohlensäureesterendgruppen.
Die Reaktionstemperaturen liegen in beiden Reaktionsstufen zwischen 0° C und 95° C, vorzugsweise zwischen 20° C und 80° C, wobei die Reaktionstemperaturen in beiden Reaktionsstufen voneinander unabhängig eingestellt sein können. Das erfindungsgemäße Verfahren kann ohne Überdruck oder mit Überdrücken bis zu 50 bar durchgeführt werden, wobei wiederum die beiden Reaktionsstufen unabhängig voneinander unter Druck gestellt werden können.
Die Verweilzeiten betragen in der ersten Reaktionsstufe wenige Sekunden bis 30 Minuten, vorzugsweise 30 Sekunden bis 15 Minuten; in der zweiten Stufe sind Verweilzeiten von 1 bis 60 Minuten einzuhalten.

Geeignete Alkalihydroxide sind beispielsweise LiOH, NaOH oder KOH, die entweder in fester Form oder vorzugsweise als hochkonzentrierte wäßrige Lösungen zudosiert werden.

Als Kettenregler zur Einstellung der umseitig aufgeführten Molekulargewichte werden monofunktionelle Verbindungen insbesondere Monophenole in den bekannten Molmengen, bezogen auf Mole Diphenole, eingesetzt.

Ebenso können die erfindungsgemäß erhältlichen Polycarbonate durch den Einbau geringer Mengen, vorzugsweise von Mengen zwischen 0,05 und 2,0 Mol-%, bezogen auf eingesetzte Diphenole, an drei- oder mehr als dreifunktionellen Verbindungen, insbesondere solchen mit drei oder mehr als drei phenolischen Hydroxygruppen verzweigt sein. Polycarbonate dieser Art sind z. B. in den deutschen Offenlegungsschriften 1 570 533, 2 113 347, 2 500 092 sowie in dem US-Patent Re 27682 beschrieben.

Geeignete Verzweiger sind beispielsweise 1,4-Bis-(4',4"-dihydroxytriphenyl)-methyl-benzol oder 3,3-Bis-(4-hydroxy-3-methyl-phenyl)-2-oxo-2,3-dihydroindol (Isatin-bis-o-kresol).

Nach dem erfindungsgemäßen Verfahren können aromatische Polycarbonate mit mittleren Gewichtsmittelmolekulargewichten $\overline{M}w$ zwischen 2500 und 200 000 ($\overline{M}w$ ermittelt durch Messungen der rel. Viskosität in $CH_2Cl_2$ bei 25° C und einer Konzentration von 0,005 g/cm³) erhalten werden.

Die während des Verfahrens ausgeschiedenen Alkalichloride, Alkalicarbonate und eventuell Alkalihydrogencarbonate werden nach Verlassen der zweiten Reaktionsstufe aus dem Reaktionsgemisch, nach bekannten technischen Verfahren, beispielsweise über Drehfilter, Schälzentrifugen abgetrennt und mit dem für die Polycarbonatherstellung verwendeten Lösungsmittel gewaschen.

Das isolierte Salzgemisch, bestehend aus Alkalichlorid, Alkalicarbonat und gegebenenfalls Alkalihydrogencarbonat, kann durch Behandlung mit Salzsäure quantitativ in Alkalichlorid übergeführt werden und beispielsweise für eine Chloralkalielektrolyse verwendet werden.

Nach Verlassen der zweiten Reaktionsstufe wird auch ein Teil der als gesättigte Salzlösung vorliegenden wäßrigen Phase ausgeschleust, wobei die Trennung von der organischen Phase nach üblichen, für die Polycarbonatherstellung nach dem Zweiphasengrenzflächenverfahren bekannten Methoden erfolgt.

Im allgemeinen werden somit beispielsweise das pro kg Bisphenol-A-Polycarbonat entstehende Gemisch aus ca. 0,54 kg NaCl und ca. 0,07 kg $Na_2CO_3$ zu etwa 65 Gew.-% als Feststoff abgeschieden und der Rest als gesättigte Salzlösung ausgeschleust.

Die gesättigten Salzlösungen werden beispielsweise nach Behandlung mit Salzsäure in reine Alkalichloridlösungen überführt, welche via Chloralkalielektrolyse für die Gewinnung von Chlor und beispielsweise Natriumhydroxid brauchbar sind.

Die von der wäßrigen Phase befreite, organische, das gebildete Polycarbonat enthaltende Phase wird nach bekannten Methoden gereinigt und das Polycarbonat nach bekannten Methoden isoliert.

Die nach dem erfindungsgemäßen Verfahren erhältlichen Polycarbonate können in bekannter Weise zu Formkörpern verarbeitet werden und im Falle von niedermolekularen Produkten beispielsweise als Additive zur Modifizierung von hochmolekularen Polycarbonaten eingesetzt werden.

Die erfindungsgemäß erhältlichen Polycarbonate können modifiziert werden durch Zusatz von Füllstoffen oder Stabilisatoren wie dies für die jeweilige Anwendung erforderlich ist.

## Beispiel 1

In einem Dreihalskolben mit Rührer, Tropftrichter, Thermometer, Gaseinleitungs- und Gasableitungsrohr werden 68,4 g Bisphenol A in 340 g konzentrierter Natriumchloridlösung mit 1,26 g p-tert.-Butylphenol suspendiert. Nach Zugabe von 48 g 50%iger Natronlauge und 500 ml Methylenchlorid wird innerhalb von 20 Minuten 36 g Phosgen eingeleitet. Durch gleichzeitige Zugabe von Natronlauge wird der pH-Wert auf ca. 13 gehalten. Nach Ende des Phosgeneinleitens werden 4 ml einer 4%igen wäßrigen Triäthylaminlösung zugegeben und es wird 45 Minuten bei pH 13—14, ggf. unter Zugabe weiterer Natronlauge nachgerührt. Nach Abtrennen der festen Alkalisalze werden diese mit Methylenchlorid gewaschen. Das Filtrat wird in die Phasen aufgetrennt. In der wäßrigen Phase ist kein Bisphenol nachweisbar. Die Salze lösen sich quantitativ in salzsaurem Wasser.

Die organische Phase wird zusammen mit der Waschlösung der Salze 1× mit verdünnter Phosphorsäure und danach mit Wasser elektrolytfrei gewaschen. Nach Abdampfen des Methylenchlorids werden 74,6 g Polycarbonat erhalten.

Die Kennzahlen sind:

| | |
|---|---|
| rel. Viskosität (0,005 g/cm³ Methylenchlorid) | 1,321 |
| vers. Chlor [ppm] | 3 |
| —OH— Endgruppen [%] | 0,016 |

Beispiel 2

In einem kühlbaren Rührkessel werden folgende Suspensionen und Lösungen eingepumpt:

1. 60,8 kg/h einer Suspension von Bisphenol A in einer gesättigten Salzlösung mit folgender Zusammensetzung:
   - 91,2 kg Bisphenol A
   - 450 kg gesättigte Salzlösung (wäßrige Phase aus der Reaktion, Salze zu Natriumchlorid/$Na_2CO_3$ und eventuell $NaHCO_3$)
   - 64 kg 50%ige Natronlauge
   - 0,05 kg Natriumborhydrid
   - 1,9 kg p-tert.-Butylphenol
2. 4,7 kg/h Phosgen mit
   78 kg/h Lösungsmittelgemisch bestehend aus 55 Teilen Methylenchlorid und 45 Teilen Chlorbenzol und
3. 3,6 kg/h 50%ige Natronlauge

Die Reaktionstemperatur beträgt 34°C; die Konzentration an OH in der wäßrigen Reaktionsphase 0,13%. Die mittlere Verweilzeit beträgt 12 Minuten.

Der aus dem Reaktor abfließenden Reaktionsmischung werden 1,5 kg einer 2%igen Lösung von Triäthylamin in Chlorbenzol und weitere Natronlauge zur Erhöhung der OH-Konzentration auf 0,25—0,35% zugefügt. Die Aufkondensation des Oligocarbonats wird in einer Rührkesselkaskade bestehend aus 3 Rührkesseln durchgeführt. Die mittlere Verweilzeit beträgt 24 Minuten, die Temperatur 34—36°C.

Nach der Abtrennung der ausgefallenen Salze über eine Zentrifuge werden in der wäßrigen Reaktionsphase 0,29% OH gefunden. Bisphenol A ist nicht nachweisbar.

Das mit einem Lösungsmittelgemisch aus Methylenchlorid und Chlorbenzol gewaschene Salz (ca. 6 kg) löst sich quantitativ in salzsaurem Wasser. Der Umsatz von Bisphenol A beträgt demnach 100%.

Die Polycarbonatlösung wird nach bekannten Verfahren elektrolytfrei gewaschen und das Polycarbonat isoliert.

Die Kennzahlen des isolierten Polycarbonats sind:

| | |
|---|---|
| rel. Viskosität (0,005 g/$cm^3$ Methylenchlorid): | 1,287 |
| verseifbares Chlor [ppm] | 2 |
| —OH-Endgruppen [%] | 0,011 |
| p-tert.-Butylphenyl-Endgruppen [%] | 1,79 |
| anorganisches Chlor [ppm] | 2 |
| $M_n$ | 15.700 |
| $M_w$ | 29.500 |
| U*) | 0,88 |
| Farbzahl**) | 0,25 |

*) Uneinheitlichkeit $= \frac{Mw}{Mn} - 1$

**) Die Polycarbonat-Farbzahl ist eine empirische relative Kennziffer. Diese ist so zu definieren, daß 0,05 Einheiten bei einer Prüfabdicke von 4 mm im Gegenlicht eine photometrisch unterscheidbare Abstufung ermöglicht.

Beispiel 3

In einen Reaktor werden folgende Suspensionen und Lösungen eingepumpt:

1. 91,2 kg/h einer Suspension von Bisphenol A in einer gesättigten Salzlösung mit folgender Zusammensetzung:
   - 91,2 kg Bisphenol A
   - 450 kg gesättigte Salzlösung (wäßrige Phase aus der Reaktion, Salze: Natriumchlorid/$Na_2CO_3$ und ggf. $NaHCO_3$)
   - 65 kg 50%ige Natronlauge
   - 0,05 kg Natriumborhydrid
   - 1,9 kg p-tert.-Butylphenol
   - 0,303 kg Triäthylamin
2. 6,77 kg/h Phosgen mit
   72 kg/h Chlorbenzol
3. 0,9 kg/h 50%ige Natronlauge

Die Reaktionstemperatur beträgt 71°C: die Konzentration an OH in der wäßrigen Reaktionsphase 0,03%, die mittlere Verweilzeit 1,3 Minuten.

Der aus dem Reaktor abfließenden Reaktionsmischung wird zur Erhöhung der OH-Konzentration auf 0,20—0,30% weitere Natronlauge zugeführt. Die Aufkondensation wird in eine Rührkesselkaskade, bestehend aus 3 Rührkesseln, vorgenommen. Die mittlere Verweilzeit beträgt 21 Minuten, die Temperatur 74°C.

Die ausgefallenen Salze werden über eine Zentrifuge abgetrennt. In der wäßrigen Phase sind 0,26% OH. Bisphenol ist nicht nachzuweisen.

Das mit Chlorbenzol gewaschene Salz löst sich vollständig in salzsaurem Wasser. Der Umsatz beträgt 100%.

Die Polycarbonatlösung wird nach bekannten Verfahren elektrolytfrei gewaschen und das Polycarbonat isoliert.

Das Polycarbonat ist durch folgende analytische Kennzahlen charakterisiert:

| | |
|---|---|
| rel. Viskosität (0,005 g/$cm^3$ Methylenchlorid): | 1,274 |
| verseifbares Chlor [ppm] | < 2 |
| —OH-Endgruppen [%] | 0,019 |
| p-tert.-Butylphenyl-Endgruppen [%] | 1,77 |
| anorganisches Chlor [ppm] | < 2 |
| $M_n$ | 14.300 |
| $M_w$ | 28.200 |
| U | 0,97 |
| Farbzahl | 0,1 |

**Patentansprüche**

1. Verfahren zur Herstellung von aromatischen, insbesondere thermoplastischen Polycarbonaten nach dem Phasengrenzflächenverfahren, dadurch gekennzeichnet, daß man das Verfahren in Gegenwart einer gesättigten Lösung von Alkalichlorid, Alkalicarbonat, Alkaliphenolaten und gegebenenfalls Alkalihydrogencarbonat durchführt, und die bei dem Verfahren entstehenden Mengen an Alkalichlorid, Alkalicarbonat und gegebenenfalls Alkalihydrogencarbonat in fester Form abtrennt.

2. Verfahren gemäß Anspruch 1, dadurch gekennzeichnet, daß das Alkali Natrium ist.

**Claims**

1. Process for the preparation of aromatic, in particular thermoplastic, polycarbonates by the phase boundary process, characterised in that the process is carried out in the presence of a saturated solution of alkali metal chloride, alkali metal carbonate, alkali metal phenolates and, if appropriate, alkali metal bicarbonate, and the quantites of alkali metal chloride, alkali metal carbonate and, if appropriate, alkali metal bicarbonate forming during the process are separated off in solid form.

2. Process according to Claim 1, characterised in that the alkali metal is sodium.

**Revendications**

1. Procédé de production de polycarbonates aromatiques, notamment thermoplastiques, selon le procédé uttilisant des surfaces limites de phases, caractérisé en ce qu'on met le procédé en oeuvre en présence d'une solution saturée de chlorure alcalin, de carbonate alcalin, de phénates alcalins et éventuellement d'hydrogénocarbonate alcalin, et en ce qu'on sépare sous forme solide les quantités de chlorure alcalin, de carbonate alcalin et éventuellement d'hydrogénocarbonate alcalin que l'on obtient dans ce procédé.

2. Procédé selon la revendication 1, caractérisé en ce que le métal alcalin est le sodium.